# EUROPEAN PATENT APPLICATION

(11) **EP 4 181 353 A1**
(43) Date of publication of application: **17.05.2023**
(21) Application number: 21207530.3
(22) Date of filing: 10.11.2021
(51) Int. Cl.: H02K 1/2792, H02K 1/30

(54) **COMPOSITE MAGNET CARRIER**

(71) Applicant: Hamilton Sundstrand Corporation, Charlotte, NC 28217-4578 (US)
(72) Inventor: EASLEY, Christian, Solihull, B90 4SS (GB); PAGE, Andrew E., Solihull, B90 4SS (GB); DAY, Aaron, Solihull, B90 4SS (GB)
(74) Representative: Dehns

(57) **Abstract**

There is provided a magnet carrier 200 for carrying magnets in an outer rotor machine, the magnet carrier comprising: an axis of rotation A; a hub portion 210; a tapered portion 220 extending radially outwardly from the hub portion, the tapered portion having an inner side 222 and an outer side 224, and a radially outer region 226 spaced from the hub; a flange portion 230 extending circumferentially from, and away from, the inner side of the tapered portion, the flange portion having a radially outwardly facing surface 232 and a radially inwardly facing surface 234, the radially inwardly facing surface for supporting the magnets, and the flange portion having a proximal region 236 and a distal region 238 that are proximal and distal to the tapered portion respectively; and a curved corner portion 240 connecting the radially outer region of the tapered portion to the proximal region of the flange portion, wherein each of the hub portion, the tapered portion, the corner portion and the flange portion of the magnet carrier are made of a carbon fibre composite and each portion leads into the next portion so as to provide a continuous composite body from the hub portion to the distal region of the flange portion.

## Description

### Technical Field

The present disclosure relates to a magnet carrier for carrying magnets in an outer rotor machine. There present disclosure also relates to an outer rotor for such a machine, an outer rotor machine and a method of manufacturing a magnet carrier, an outer rotor and an outer rotor machine.

### Background

Magnet carriers are used in rotor machines (for example, electric motors and generators) to support the magnets. In an outer rotor machine, magnets are disposed in a magnet carrier located radially outwardly of a stator. The magnet carrier rotates around an axis of rotation, which axis includes a stator, the rotation is driven by the electromagnetic interaction between the magnets and coils of wire provided in the stator.

In order to construct an outer rotor machine having such a magnet carrier, the magnet carrier is usually cantilevered from the main shaft of the machine, meaning that the magnet carrier is only supported at one of its axial ends. The outer rotor machine design is advantageous because the torque supplied by the magnets increases as the radius of the magnet's rotation increases, this is because the higher the rate of change of the angular momentum of the magnets the higher the torque which is produced. Hence it is desirable to increase the radial distance of the magnets from the shaft to increase the torque and thereby increase the power generated by the machine. This can be achieved through use of the outer rotor design as compared to the use of an inner rotor design.

However, when a magnet carrier suited to use in an outer rotor motor design spins, an increased centrifugal force is experienced by the magnet carrier compared to that of an inner rotor motor design as a result of the rotational mass, in particular the magnet mass rotating at the extended radius. This can result in an increased outwards deflection of the free end of the cantilevered magnet carrier. Outwards deflection can adversely affect the performance of the motor, in particular by affecting the magnet to stator air gap, and so it is desirable to provide the magnet carrier with sufficient stiffness, particularly in the radial and hoop direction, so as to avoid such deflection. In order to provide sufficient stiffness in a magnet carrier composed of metal, additional thickness of the material is required compared to a magnet carrier for an inner rotor design, which results in the magnet carrier having not only a high static mass but also an undesirably high rotational mass.

It is desirable to reduce the mass of a rotor, in order to increase the power density (kW/kg), and thereby increase the efficiency of the motor. The mass of a motor can be divided into two distinct categories; these categories are the active mass and the passive mass. The active mass consists of the mass of all of the electromagnetically active components. The passive mass consists of the mass of the remainder of the components in the motor machine. The mass of the magnet carrier contributes to the passive mass of the motor machine.

Outer rotor motors are increasingly being proposed for aircraft where reductions in weight can lead to improvements in the range of the aircraft. In order to increase the fuel efficiency of the aircraft it is desirable to minimise the weight of the components of the aircraft, hence further advantages can be gained from minimising the mass of outer rotor machines.

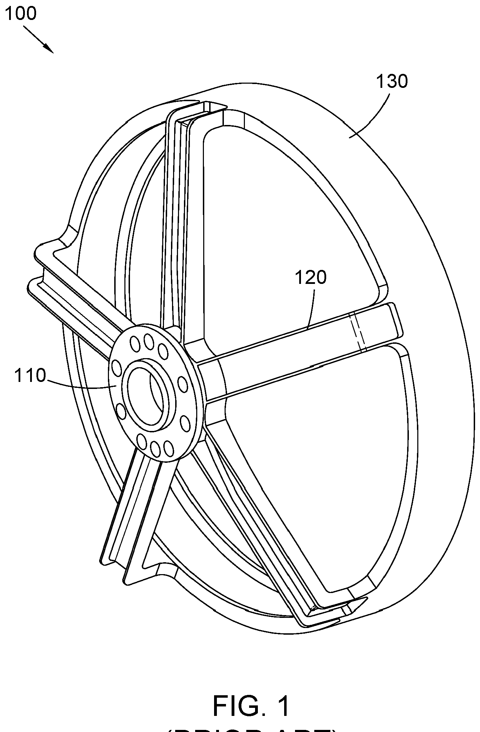

Magnet carriers 100 suited to an outer rotor motor design known in the art, such as that shown in Figure 1, are typically composed of titanium. By way of example, the passive mass of the illustrated magnet carrier, which is for a propulsion engine of an aircraft, is approximately 6 kg. The magnet carrier 100 comprises multiple radial spokes 120 connecting the radially outer flange portion 130 (in which the magnets are disposed in use) to the radially inner hub portion 110 which in use surrounds the main shaft of the motor.

### Summary

According to a first aspect of the present disclosure there is provided a magnet carrier for carrying magnets in an outer rotor machine, the magnet carrier comprising: an axis of rotation; a hub portion; a tapered portion extending radially outwardly from the hub portion, the tapered portion having an inner side and an outer side, and a radially outer region spaced from the hub portion; a flange portion extending circumferentially from, and away from, the inner side of the tapered portion, the flange portion having a radially outwardly facing surface and a radially inwardly facing surface, the radially inwardly facing surface for supporting the magnets, and the flange portion having proximal and distal regions that are proximal and distal to the tapered portion respectively; and a curved corner portion connecting the radially outer region of the tapered portion to the proximal region of the flange portion, wherein each of the hub portion, the tapered portion, the corner portion and the flange portion of the magnet carrier are made of a carbon fibre composite and each portion leads into the next portion so as to provide a continuous composite body from the hub portion to the distal region of the flange portion.

The magnet carrier may have been formed from stacked carbon fibre composite plies.

Plies within the stack of plies which forms the tapered portion of the magnet carrier may be formed of twill weave carbon fibre composite plies and may be stacked in order to alternate between a 0/90 configuration and a +/-45 configuration.

The stack of carbon fibre composite plies forming the flange portion may comprise a first stack section of unidirectional plies in which the fibres of the unidirectional plies substantially align with the hoop direction of the flange portion.

The first stack section of the stack of carbon fibre composite plies forming the flange portion may be disposed between a second stack section and a third stack section, each of the second and third stack sections may comprise twill weave carbon fibre composite plies stacked in order to alternate between a 0/90 configuration and a +/-45 configuration.

The tapered portion may taper in thickness from the hub portion towards the corner portion from a first thickness at the hub portion to a second thickness at the corner portion, the first thickness being at least twice that of the second thickness. Optionally, the first thickness of the tapered portion may be at least three times that of the second thickness of the tapered section.

The radially inwardly facing surface of the flange portion may comprise castellations, and recesses formed by the castellations may provide a plurality of seats for at least some of the magnets.

The recesses may extend in an axial direction across the radially inwardly facing surface separated by protrusions of the castellations.

The ratio of the circumferential length of the recesses to a circumferential length of the protrusions may be between 1:1.5 and 1:2.5.

An outer rotor machine may be provided comprising the magnet carrier as discussed above, and a plurality of magnets may be fitted to the radially inwardly facing surface of the flange portion of the magnet carrier.

The magnets may be secured to the magnet carrier using an adhesive.

The plurality of magnets may form a Halbach array of magnets, wherein the pole magnets of the Halbach array are positioned within the recesses of the castellations and the transition magnets of the Halbach array are positioned on protrusions of the castellations.

The magnet carrier may be disposed in the outer rotor machine in a cantilevered configuration.

The outer rotor machine may be for an aircraft propulsion engine, and may optionally be for an aircraft propeller.

According to a second aspect of the present disclosure, there is provided a method of manufacturing a magnet carrier. The method comprises: providing a tool on which to mould the magnet carrier as discussed above, the surface of the tool being shaped to the inverse of a surface of the magnet carrier; laying up a carbon fibre composite body on top of the tool to form a magnet carrier pre-cursor; and curing the carbon fibre composite body to form the magnet carrier.

Curing the carbon fibre composite body may comprise vacuum bagging and autoclaving the magnet carrier pre-cursor to form the magnet carrier.

The tool may be made from aluminium and may be shaped and dimensioned to be at design intent shape during autoclaving of the rotor precursor.

The carbon fibre composite plies may be pre-impregnated with a matrix-forming material.

### Figures

Embodiments will now be described in more detail by way of example only and with reference to the following figures in which:
Figure 1 shows a perspective view of a magnet carrier known in the prior art.
Figure 2 shows a perspective view of a magnet carrier.
Figure 3 shows a fragmented cross sectional view of a magnet carrier.
Figure 4 shows a cross section of an outer rotor machine comprising a magnet carrier.
Figure 5 is a fragmented view of a magnet carrier as viewed along the axis of rotation of the magnet carrier.
Figure 6 shows a fragmented view of a magnet carrier as viewed along the axis of rotation of the magnet carrier.
Figure 7 shows a cross section of the magnet carrier of Figure 6 taken along the line X-X.
Figure 8 shows a fragmented axial cross section of the flange portion of the magnet carrier.
Figure 9 shows a flow chart of a manufacturing process for manufacturing a magnet carrier.

As indicated above, there is provided a magnet carrier 200 for carrying magnets 420 in an outer rotor machine. The magnet carrier comprises an axis of rotation A, a hub portion 210, a tapered portion 220, a curved corner portion 240 and a flange portion 230. The tapered portion 220 extends radially outwardly from the hub portion 210 and has an inner side 222 and an outer side 224, and a radially outer region 226 which is spaced from the hub portion 210. The flange portion 230 extends circumferentially from, and away from, the inner side 222 of the tapered portion 220. The flange portion 230 has a radially outwardly facing surface 232 and a radially inwardly facing surface 234, the radially inwardly facing surface 234 being for supporting the magnets 420. The flange portion 230 also has proximal and distal regions 236, 238 that are proximal and distal to the tapered portion 220 respectively. The curved corner portion 240 connects the radially outer region 226 of the tapered portion 220 to the proximal region 236 of the flange portion 230. Each of the hub portion 210, the tapered portion 220, the corner portion 240 and the flange portion 230 of the magnet carrier 200 are made of a carbon fibre composite. Moreover, each portion 210, 220, 240, 230 leads into the next portion 210, 220, 240, 230 so as to provide a continuous composite body from the hub portion 210 to the distal region 238 of the flange portion 230.

The magnet carrier 200 is formed of carbon fibre composite material so as to utilise the high strength to weight ratio afforded by the composite material. Carbon fibre composite materials have a high elastic modulus to density ratio (particularly when compared to isotropic metal materials) and so the stiffness required to avoid deflection within the magnet carrier 200 caused by the centrifugal force of the rotating magnets 420 can be achieved using a lower mass of material compared to a metallic magnet carrier 100. Similarly carbon fibre composite materials have a high tensile strength to density ratio (particularly when compared to isotropic metal materials) and so require less mass to achieve the required strength to withstand the forces experienced by the magnet carrier 200 during operation compared to isotropic metallic materials.

Carbon fibre composites are composed of a matrix material, which is typically an epoxy, and a carbon fibre material, which is typically a high modulus carbon fibre such as M46J type carbon fibre. The carbon fibre composite material may be a carbon fibre reinforced polymer.

The properties of a carbon fibre composite material depend on the configuration of the composite's components. For example, the high strength and stiffness of the composite material is achieved in the direction aligned to the axial length of the carbon fibres. Hence a carbon fibre composite having the carbon fibres substantially aligned in one direction (a unidirectional carbon fibre composite) will have a high elastic modulus and tensile strength in that direction. A carbon fibre composite having an isotropic arrangement of matrix and fibres will have an isotropic elastic modulus and tensile strength, and where the same ratio of fibre to matrix is used, this isotropic elastic modulus and tensile strength will be reduced in magnitude compared to that in the fibre direction of the unidirectional fibre composite. In the magnet carrier 200 of the present disclosure, placement of the carbon fibre composite can be tailored in order to ensure that the high elastic modulus and tensile strength is arranged in a direction opposing the forces experienced by the magnet carrier 200 during use which act to cause the deflection of the magnet carrier 200.

Forming the magnet carrier 200 from a carbon fibre composite thus reduces the mass of the component and therefore reduces the passive mass of a rotor assembly in which it is employed within an outer rotor machine. It also increases the stiffness to weight ratio of the component, and allows for direction specific tailoring of the stiffness of the component by utilising the anisotropic elastic modulus of the carbon fibre composite. The magnet carrier 200 can be made thinner and therefore will have a smaller volume with a smaller space envelope. The increased stiffness reduces deflection of the magnet carrier 200 during use, and therefore minimises any increase in the air gap between the magnets 420 and the stator that would result from such deflection.

The corner portion 240 is curved such that there is a smooth transition from the radially and circumferentially extending surface of the tapered portion 220 to the axially and circumferentially extending surface of the flange portion 230.

The corner portion 240 may have a radius of curvature, which radius of curvature is more than 5% of the outer radial dimension of the magnet carrier 200, optionally more than 10% of the outer radial dimension, and/or more than 10% of the axial width of the flange portion 230, optionally more than 25% of the axial width of the flange portion 230. In one example, the magnet carrier has an outer radial dimension that exceeds 200mm and a flange portion with a width that exceeds 50mm, and the radius of curvature of the curved corner portion 240 joining the tapered portion 220 to the flange portion 230 is over 20mm.

Providing the corner portion 240 with a curve instead of a sharp angle mitigates stress concentration effects in the corner portion 240 caused by the sharp angle. It also, as will become clear from the discussion below, helps fabrication by facilitating the removal of the magnet carrier 200 from a mould.

The carbon fibre composite plies are configured such that the fibres are arranged to adopt the curve of the corner portion 240. Some fibres may therefore extend from the tapered portion 220 to the flange portion 230 without interruption or an abrupt change in orientation providing strength to the curved corner structure. In this way, tensile loads can be transmitted smoothly from the flange portion 230 into the tapered portion 220 and on to the hub portion 210, and the three dimensional form this develops assists to transfer torque developed in the flange portion 230 towards the hub portion 210. Construction of the curved corner portion 240 from the carbon fibre composite plies also enables this fibre arrangement to be achieved in a simple way, particularly when forming the structure using the manufacturing method of the present disclosure.

The magnet carrier 200 may be formed from stacked carbon fibre composite plies.

The magnet carrier 200 may hence have a structure comprising a plurality of layers, formed by a plurality of carbon fibre composite plies in which each ply is laid on top of another to form a stack of carbon fibre composite plies. A single carbon composite ply comprises a planar, or sheet-like, structure with a single woven layer of carbon fibres.

By forming the magnet carrier 200 from carbon composite plies, a stacked, or layered, arrangement of plies within the magnet carrier 200 is achieved. A ply can be selected for inclusion in the stack based on the fibre arrangement within that ply in order to utilise the properties of the ply most effectively. For example, where high tensile strength or stiffness is required in a specific direction in a specific position of the magnet carrier 200, a ply having an anisotropic arrangement of fibres is selected to be placed in a corresponding position within the stack of composites forming the magnet carrier 200. In this way the tensile strength and elastic modulus of the magnet carrier 200 can be tailored in specific directions and at specific locations within the magnet carrier 200 by modifying the arrangement of plies within the stack.

The stack of carbon fibre composite plies may include one or more metal sheets comprised within the stack. The metal sheet may comprise copper, or another material having similar electrical conductance properties. The metal may alternatively be provided as a metal mesh embedded into one or more of the carbon fibre composite plies. The metal included in the construction of the magnet carrier 200 provides electromagnetic compatibility protection and thus helps to mitigate negative electromagnetic compatibility effects. In the case of the magnet carrier 200 being used in an electric motor, the metal reduces transmittance of electromagnetic radiation from the motor. In particular, there are strict limits on the transmittance of electromagnetic radiation from electric motors used as a propulsive engine on an aircraft; the inclusion of metal within the magnet carrier as discussed can be suitable to adhere to such limits. Also in the case of an electric motor being used as a propulsive engine on an aircraft, the metal will also provide some lightning protection.

Plies within the stack of plies which forms the tapered portion of the magnet carrier 200 may be formed of twill weave carbon fibre composite plies and may be stacked in order to alternate between a 0/90 configuration and a +/-45 configuration.

A twill weave carbon fibre composite comprises carbon fibres arranged in a woven pattern in which a bundle of carbon fibres (comprising a plurality of filaments/fibres) extending in a first direction is woven under and over consecutive other bundles of carbon fibres which extend in a perpendicular direction to the first bundle of carbon fibres in order to form a sheet-like structure from the fibres. Each bundle may be woven under and over consecutive groups of other bundles extending perpendicular to it. For example the twill weave may be a 2x2 twill weave where the bundles of fibres in the first direction pass under two bundles and then over two bundles in a repeated pattern, or a 4x4 twill weave where bundles of fibres extending in a first direction pass under four bundles which extend in a direction perpendicular to the first direction and over four bundles which extend in a direction perpendicular to the first direction in a repeated pattern. Plies having a twill weave therefore comprise carbon fibres extending at 0 and 90 degrees relative to each other.

In order to form a stack of plies having a 0/90 configuration and a +/-45 configuration, plies are stacked such that the direction of the fibres of one ply is rotated 45 degrees relative to the fibres of the adjacent ply. Plies may also be incorporated into the stacks such that the orientation of fibres within adjacent plies is rotated by an angle of +30/-60, +60/-30, or other suitable orientations. As discussed above the high tensile strength and elastic modulus of the carbon fibre composite aligns with the axial length of the carbon fibres. Therefore by offsetting the direction of extension of the fibres in the plies within the stack, the high tensile strength and elastic modulus can be utilised in many directions. By using the 0/90 and +/-45 configuration the high tensile strength and elastic modulus can be regularly distributed between the directions within the magnet carrier 200 whilst the construction of the individual plies and of the stack of plies remains simple.

The stack may comprise a single +/-45 ply stacked above a 0/90 degree ply, and a single 0/90 degree ply stacked above the +/-45 ply and so forth. The stack may alternatively comprise a plurality of +/-45 plies stacked above a single 0/90 ply or a plurality of 0/90 plies. The number of plies in the plurality of +/-45 plies and the plurality of 0/90 plies need not be the same, and the number of +/-45 degree plies or 0/90 degree plies in each stacked layer need not be consistent throughout the entire stack.

The plies may alternatively be stacked so that the angle of the fibre direction within one group of plies is arranged at an angle greater than or less than +/-45 degrees relative to a 0/90 degree ply below it.

The stack of carbon fibre composite plies forming the flange portion 230 may comprise a first stack section of unidirectional plies in which the fibres of the unidirectional plies substantially align with the hoop direction of the flange portion 230.

In a unidirectional ply the carbon fibres are aligned in substantially the same direction throughout the ply. The stack of plies may therefore comprise multiple layers of the fibres stacked above each other but extending the same direction.

The flange portion 230 of the magnet carrier 200 is provided to support magnets 420 on its radially inwardly facing surface. As the magnet carrier 200 rotates the flange portion 230 is therefore subjected to high levels of stress caused by the centrifugal forces generated by the rotating magnets 420. In order to prevent the flange portion 230 from deflecting or deforming beyond a tolerable level as a result of this stress, it is beneficial to align the high tensile strength and high elastic modulus of the carbon fibre composite corresponding to the fibre direction within the stress direction. The centrifugal force will act to force the magnet carrier 200 to expand radially outwardly, particularly at its unsupported edge, hence causing the circumference of the flange portion 230 to increase and thereby inducing a tensile stress in the hoop direction of the flange portion 230. By aligning the carbon fibres within a first stack section of the stack of plies of the flange portion 230 to the hoop direction of the flange portion 230, the high tensile strength and elastic modulus of the carbon fibres can be used effectively to mitigate deflection of deformation in the flange portion 230.

The first stack section of the stack of carbon fibre composite plies forming the flange portion 230 may be disposed between a second stack section and a third stack section, each of the second and third stack sections comprise twill weave carbon fibre composite plies stacked in order to alternate between a 0/90 configuration and a +/-45 configuration.

By providing a second and third stack section within the stack of plies forming the flange portion 230, in which the second and third stack sections have an arrangement of plies which alternate between 0/90 and +/-45, increased strength and stiffness can be provided in other directions, in addition to the hoop direction of the flange portion 230.

As discussed above, the arrangement of the twill weave plies having 0/90 and +/-45 alternating configuration may alternatively comprise an arrangement where the angle of offset between the fibres of adjacent plies is greater than or less than +/- 45 degrees.

The tapered portion 220 may taper in thickness from the hub portion 210 towards the corner portion 240 from a first thickness at the hub portion 210 to a second thickness at the corner portion 240, the first thickness being at least twice that of the second thickness.

The tapered portion 220 may have an increased thickness towards the hub portion 210/axis of rotation A of the magnet carrier 200, so that increased strength and stiffness is provided in order to withstand the high axial and torque loads experienced during transmission of torque to a motor shaft connected the hub portion 210. The reduced thickness in the radially outer regions 226 of the tapered portion 220 help to reduce rotational mass.

The thickness of the tapered portion 220 may decrease in steps away from the radial centre of the magnet carrier 200, the steps being formed by truncating the ends of the plies in the fibre stack which form the tapered section 220. Alternatively the thickness of the tapered portion 220 may decrease more smoothly away from the radial centre of the magnet carrier 200 so that the tapered portion 220 and the hub portion 210 form a curved shape on the outer side 224 of the tapered portion 220.

The first thickness of the tapered portion 220 may be at least three times that of the second thickness of the tapered section 220.

Such a ratio may help to optimise the material's tensile and rotational inertia properties, providing a maximum strength for resisting radial/circumferential distortion while offering excellent torque transmission and reduced rotational inertia.

The first thickness may alternatively be four times that of the second thickness, or five times that of the second thickness.

Configuring the tapered section 220 to have a taper which reduces the thickness by several times helps to ensure that sufficient strength and stiffness is provided towards the radial centre A of the magnet carrier 200, whilst maintaining the mass at the outer regions of the magnet carrier 200 at a desirably low level so that the passive mass is minimised. Incorporating unnecessary mass, and hence material thickness, into the design should usually be avoided.

The radially inwardly facing surface 234 of the flange portion 230 may comprise castellations 270, and recesses 272 formed by the castellations 270 may provide a plurality of seats for at least some of the magnets 420.

The castellations 270 are provided along the radially inwardly facing surface 234 of the flange portion 230 such that the radial position of the radially inwardly facing surface 234 of the flange portion 230 alternates in a circumferential direction of the magnet carrier 200 between a first radial position and a second radial position. The first radial position is closer to the radial centre A of the magnet carrier 200 than the second radial position. This results in a series of recesses 272 and protrusions 274 being provided in the radially inwardly facing surface 234 of the flange portion 230. Each recess 272 is defined between two sections of the radially inwardly facing surface 234 of the flange portion 230 at the first radial distance. A recess 272 is therefore bounded by a base surface 278 at the radially inwardly facing surface 234 of the flange portion 230 at the second radial position and the radially extending surfaces 276 connecting the radially inwardly facing surface 234 of the flange portion 230 at the first radial position (the protrusion surface) to the base surface 278 of the recess 272.

In a corresponding manner, each protrusion 274 is defined between two sections of the radially inwardly facing surface 234 of the flange portion 230 at the second radial position (the base surface 278 of the recess 272). A protrusion 274 is therefore bounded by the protrusion surface 274 and the radially extending surfaces 276 connecting the protrusion surface 274 to the base surface 278 of the recess 272.

The recesses 272 and protrusions 274 may be seen to provide a stepped radially inwardly facing surface 234 of the flange portion 230 where the steps have substantially rectangular profile.

The recesses 272 may be open at the distal region 238 of the flange portion 230. This can help to facilitate fitting of the magnets 420 to the radially inwardly facing surface 234.

Where the radially outwardly facing surface 232 of the flange portion 230 is at a constant third radial position (the first and second radial positions being closer to the radial centre A of the magnet carrier 200 than the third radial position) the sections of the flange portion 230 which define the protrusions 274 will be formed from a thick section of the flange portion 230, and the sections of the flange portion 230 which define the recesses 272 will be formed from a thin section of the flange portion 230.

The plurality of recesses 272 and protrusions 274 are provided in order to locate at least some of the magnets 420 on the radially inwardly facing surface 234 of the of the flange portion 230 of the magnet carrier 200. The recesses 272 provide seats, into which at least some of the magnets 420 are placed.

Forming the castellations 270 using the carbon fibre composite allows for the continuous nature of the magnet carrier 200 to be extended to the recesses 272 and protrusions 274 and maintains the use of the high strength to weight ratio of the carbon fibre composite. Forming the castellations 270 using stacks of carbon fibre composite plies allows for the structure to be easily and simply formed e.g. by building up the plies, and allows for the castellations 270 to be integrated with the rest of the magnet carrier 200. By forming the castellations 270 as an integral part of the magnet carrier 200, lines of weakness caused by joins are avoided. The arrangement of the carbon fibre composite plies (the order they are stacked and the orientation of the fibres) can be tailored to the ply's position within the castellations 270 and hence the directional strength of the carbon fibres can be utilised.

The castellations 270 assist in the transfer of torque from the magnets 420 to the magnet carrier 200. The magnets 200 which sit within the recesses 272 of the castellations 270 abut against a radially and axially extending surface 276 connecting the base surface 278 of the recess 272 to the protrusion surface 274, therefore when the magnets are being forced to rotate additional traction is achieved between the magnets 420 and the magnet carrier 200, thereby mechanically locking in the torque transmission and improving the torque transfer.

The recesses 272 may extend in an axial direction across the radially inwardly facing surface 234 separated by protrusions 274 of the castellations 270.

The recesses 272 therefore have a base surface 278 which extends circumferentially and axially, at the second radial position. The recesses 272 can act as seats for magnets 420, and the magnets 420 can be bonded to the base surface 278 of the recess 272.

The ratio of the circumferential length of the recesses 272 to a circumferential length of the protrusions 274 may be between 1:1.5 and 1:2.5.

The circumferential length of the recesses 272 may therefore be shorter than the circumferential length of the protrusions 274. This provides a greater space for magnets 420 to be placed at the first radial position compared to the second radial position. This may be more appropriate for certain types of magnet array, e.g. where there are pole magnets 422 and transition magnets 424.

An outer rotor machine may be provided comprising the magnet carrier 200 as discussed above, and a plurality of magnets 420 may be fitted to the radially inwardly facing surface 234 of the flange portion 230 of the magnet carrier 200.

The outer rotor machine may comprise a stationary stator disposed radially inwardly of the flange portion 230 of the magnet carrier 200. With the magnets 420 fitted to the radially inwardly facing surface 234 of the flange portion 230 of the magnet carrier 200, the magnets 420 therefore surround the stator in the radial direction. The outer rotor machine may act as a motor wherein electricity passing through coils provided in the stator cause the magnets 420 and the magnet carrier 200 to rotate about the axis of rotation A of the magnet carrier 200. The outer rotor machine may act as a generator wherein rotation of the magnets 420 and the magnet carrier 200 about the axis of rotation A of the magnet carrier 200 induces an electric current to flow in coils provided in the stator.

The outer rotor machine may have a primary purpose of acting as a motor e.g. as a propulsive engine for an aircraft, but may also be used to generate electric current at appropriate times, e.g. during a decent.

The outer rotor machine having the magnet carrier 200 formed from the carbon fibre composite magnet carrier 200 will have a reduced passive mass compared to the outer rotor machine comprising a magnet carrier 100 formed from an isotropic metal. The outer rotor machine will therefore be more efficient in producing electricity when acting as a generator, or in producing rotation of the magnets 420 when acting as a motor.

The magnets 420 may be secured to the magnet carrier 200 using an adhesive.

The adhesive may be a high temp epoxy adhesive such as Hi Sol EA 9394. The adhesive ensures that a secure bond is achieved between the magnets 420 and the magnet carrier 200 such that the magnets 420 are retained in position during use of the outer rotor machine. The bond created by adhesive acts to assist in the torque transfer between the magnets 420 and the magnet carrier 200.

The dimensions of the magnets 420, and the dimensions of the recesses 272 and protrusions 274 of the radially inwardly facing surface 234 to which the magnets 420 are fitted, particularly in the circumferential direction, may be such that a small gap is provided between the magnets 420 and the surfaces of the protrusions 274 and recesses 272 when the magnets 420 are fitted. This ensures that a tight and secure fit is achieved once the adhesive is applied within the gap. The magnets 420 may be under a degree of compressions within the magnet carrier 420 for some conditions of use and/or during standby.

The plurality of magnets 420 may form a Halbach array of magnets 420,422,424, wherein the pole magnets 422 of the Halbach array are positioned within the recesses 272 of the castellations 270, and the transition magnets 424 of the Halbach array are positioned on protrusions 274 of the castellations 270.

A Halbach array is a magnet geometry applied to a series of permanent magnets. In the Halbach array the magnetisation direction of a magnet within the series is rotated relative to the magnetisation direction of the adjacent magnets, such that over the series of magnets the magnetisation direction moves through a continuous rotation. The Halbach array geometry acts to augment the magnetic field on one side of the magnets (where the magnetic flux lines of adjacent magnets reinforce the field) and correspondingly diminish the magnet field on the opposite side of the magnets (where the magnetic flux lines of adjacent magnets cancel the field).

By arranging the magnets 420, 422, 424 such that the augmented magnetic field is positioned on the radially inwardly facing side of the magnets 420, 422, 424, a stronger field is provided to interact with the stator. Thus the power that can be generated from the outer rotor machine is increased compared to a geometry of magnets 420, 422, 424 without the polar rotation. Since the adaptation is within the geometry of the magnets 420, 422, 424, the mass of the magnets 420, 422, 424 need not increase and hence the power to weight ratio of the outer rotor machine is advantageously increased.

The magnets 420, 422, 424 are provided around the radially inwardly facing surface of the flange portion 230 of the magnet carrier 200 such that the magnets 420, 422, 424 form an annular ring radially inwardly of the flange portion 230. The Halbach array forming such a configuration comprises pole magnets 422 which have parallel magnetisations, and transition magnets 424 which have magnetisations at angles between that of the pole magnets 422. The Halbach array may form an annulus having a number of pole magnets 422, the number of pole magnets 422 may be 10 or more. The pole magnets 422 may be positioned in the recesses 272 of the castellations 270, the recesses 272 acting as seats into which the pole magnets 422 are placed. The recess provides a greater surface area over which the pole magnet 422 can be secured to the magnet carrier 200. For example if an adhesive is used the pole magnets 422 can be bonded to the magnet carrier 200 through the radially extending surface 276 connecting the radially inwardly facing surface 234 of the flange portion 230 at the first radial position and radially inwardly facing surface 234 of the flange portion 230 at the second radial position, as well as the radially inwardly facing surface 234 of the flange portion 230 at the second radial position. The transition magnets 424 are placed on the protrusions 274 in between the recesses 272 and the pole magnets 422. The pole magnets 422 may be radially larger than the transition magnets 424 so that the radially inner surface created by the surfaces of the annulus formed by the magnets 420, 422, 424 is substantially smooth. The recesses 272 may have dimensions which contribute to securely fixing the pole magnets 422 to the magnet carrier 200. The radially inner surfaces of the magnets 420, 422, 424 may be curved in order to follow the circumferential curve of the flange portion and provide a smooth annular surface facing the stator.

By way of example, the annulus of magnets 420, 422, 424 may comprise 30 pole magnets 422 and 60 transition magnets 424. Thus the annulus of magnets 420, 422, 424 may alternatively comprise between 20 and 40 pole magnets 422 and between 50 and 70 transition magnets 424. The Halbach array may however follow a different magnet arrangement and the ratio of pole magnets 422 to transition magnets 424 may differ from 1:2. The ratio of pole magnets 422 to transition magnets 424 may be for example 1:1, 1:3, or 1:4. There may be more or fewer than 90 magnets 420 within the magnet arrangement.

The magnet carrier 200 may be disposed in the outer rotor machine in a cantilevered configuration.

The magnet carrier 200 is disposed in the outer rotor machine to form the outer rotor configuration. In order to connect the magnet carrier 200 to a shaft 410 of the outer rotor machine the flange portion 230 of the magnet carrier 200 is cantilevered from the shaft 410 via the hub portion 210 of the magnet carrier 200. The cantilever configuration means that only one axial end of the magnet carrier 200 is supported and the other axial end is free. The proximal end 236 of the flange portion 230 is connected to the tapered portion 220 via the curved corner portion 240 and the hub portion 210, whereas the distal end 238 of the flange portion 230 is unsupported. The distal end 238 will experience greater deflection compared to the proximal end resulting from the centrifugal load of the magnets 420, 422, 424. This is due to the lack of radial constraint at the distal end 238 and so greater hoop stress will arise in the region of the distal end 238 during use. The use of the high strength and high stiffness carbon fibre composite material aids in mitigating resultant deflection in the distal end 238 of the flange portion 230.

The present disclosure also extends to an outer rotor assembly for an outer rotor machine which comprises a magnet carrier 200 made from a carbon fibre composite as described above and a plurality of magnets 420 fitted to the radially inwardly facing surface 234 of the flange portion 230 of the magnet carrier 200. The present disclosure also extends to an outer rotor machine incorporating such an outer rotor assembly.

The outer rotor machine may be for an aircraft propulsion engine, and may optionally be for an aircraft propeller.

The outer rotor machine may therefore be a high power motor or generator and used for high power applications. The outer rotor motor may have a power of at least 100 kW. For example, the outer rotor motor may have a power of at least 150 kW, e.g., 200 kW or more, 300 kW or more, or even 400 kW or more. Optionally the outer rotor motor may have a power of at least 500 kW.

According to a further aspect of the present disclosure, there is provided a method of manufacturing a magnet carrier 200. The magnet carrier 200 may be as described above . The method comprises: providing a tool on which to mould the magnet carrier 200, the surface of the tool being shaped to the inverse of a surface of the magnet carrier 200; laying up a carbon fibre composite body on top of the tool to form a magnet carrier pre-cursor; and curing the carbon fibre composite body to form the magnet carrier 200.

The carbon fibre composite body is laid up against the surface of the tool so that the portion of the composite against the tool becomes an inner surface of the magnet carrier once the composite body is removed from the tool. The outer surface of the tool is therefore shaped to the inverse, or mirror-image, of the inner surface of the magnet carrier.

The dish-shaped configuration of the magnet carrier is well suited to fabrication in this way since it has a form which can be removed from a tool in a straight forward manner.

The tool may be comprised of a metal so that the material withstands the heat and pressures involved in the curing process.

Curing the carbon fibre composite body may comprise vacuum bagging and autoclaving the magnet carrier pre-cursor to form the magnet carrier 200.

The vacuum bagging provides an even clamping pressure over the carbon fibre composite body to achieve a consistent distribution of matrix and ensures the carbon fibre composite body is held in the desired configuration during autoclaving. The vacuum bagging also removes air from the carbon fibre composite body in order to avoid the inclusions of voids within the cured composite structure, which would otherwise reduce the strength of the cured magnet carrier 200.

Alternatively, the curing of the carbon fibre composite body may comprise using a two-part tool to autoclave the magnet carrier pre-cursor in order to form the magnet carrier 200. A first part of the two-part tool provides the surface against which the carbon fibre composite plies are laid against, and a second part of the two-part tool is positioned on the upper surface of the stack of plies in order to provide a constraint to the composite body during autoclaving. By constraining the composite body in this way during the autoclaving process the desired dimensions of the cured structure can be achieved with high precision. Using a two-part tool creates an improved surface finish compared to vacuum bagging the composite body for autoclaving. The second-part of the two-part tool may have a lower thermal expansion coefficient compared to the first part of the two-part tool so that during the autoclaving process the first part of the tool expands to the design intent shape of the cured composite part, and the second part of the two-part tool provides a constraint against which the composite body is forced during autoclaving. The two-part tool can be also be used within other curing processes for curing of the carbon fibre composite body.

The tool, or at least one part thereof, may be made from aluminium and may be shaped and dimensioned to be at design intent shape during autoclaving of the rotor precursor.

The thermal expansion of the tool is taken into account such that the dimensions of the tool match the desired (inverse) dimensions of the magnet carrier 200 when the tool is at the high temperature of the autoclaving step. Once cured, the shrinkage of the carbon fibre composite is negligible compared to that of the metal or aluminium and therefore the dimensions of the magnet carrier 200 will remain at the dimensions at which it is cured during autoclaving. By contrast the tool will contract and may release from the magnetic carrier 200.

### Examples in more detail

Figure 1 has been described above, it shows a magnet carrier 100 known in the art and composed of titanium.

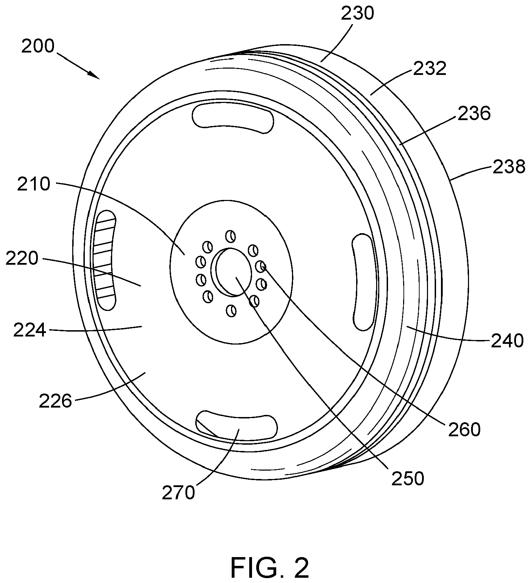

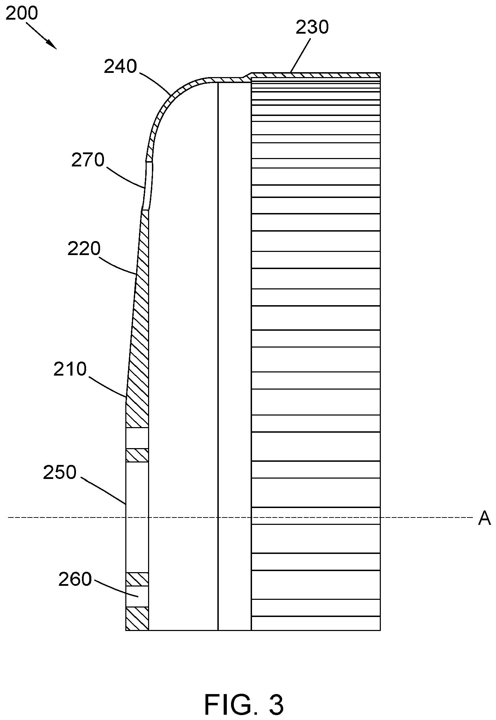

Figures 2 and 3 show a magnet carrier 200 comprising a hub portion 210, a tapered portion 220, a corner portion 240 and a flange portion 230. The hub portion 210 is continuous with the tapered portion 220, the tapered portion 220 is continuous with the corner portion 240, and the corner portion 240 is continuous with the flange portion 230.

The magnet carrier 200 has a cylindrical configuration such that the magnet carrier 200 comprises an axis of rotation A and the hub portion 210 and tapered portion 220 extend along a radially and circumferentially extending plane about axis A. The flange portion extends along a circumferentially and axially extending plane about axis A radially displaced from the axis A.

A central hole 250 is provided at the centre of the hub portion 210 for connection to a shaft of an outer rotor machine. Bolt holes 260 are provided to connect the magnet carrier 200 to the shaft of the outer rotor machine to assist in torque transfer. Outer holes 270 are provided within the tapered portion 220 to allow for easy manipulation and gripping of the magnet carrier 200 during production of the magnet carrier 200 and during assembly into an outer rotor machine.

The tapered portion 220 has an inner side 222 and an outer side 224, the outer side 224 facing away from the direction of extension of the flange portion 230 and the inner side 222 facing an area circumferentially surrounded by the flange portion 230.

The flange portion 230 comprises a proximal region 236 and a distal region 238. The proximal region 236 is continuous with the corner portion 240 whereas the distal region 238 is cantilevered with respect to the corner portion 240.

When designed to function comparably to the magnet carrier 100 of Figure 1 (i.e. when used as a propulsive engine on an aircraft), the magnet carrier 200 of Figure 2 being comprised of a carbon fibre composite resulted in a mass of 3.025 kg, less than half of the mass of the magnet carrier 100 comprised of titanium (6.20 kg). The carbon fibre composite magnet carrier 200 has a radial elastic modulus which is 18% higher than the titanium magnet carrier 100. This demonstrates an appreciable improvement in stiffness whilst significantly reducing the passive mass. The carbon fibre composite magnet carrier 200 has been designed to be stiffer in the radial direction whilst reducing the mass in regions in which providing elevated stiffness is not as critical. The thickness of the carbon fibre composite magnet carrier 200 is also reduced in some regions compared to the titanium magnet carrier 100, thus reducing the overall space envelope of the component.

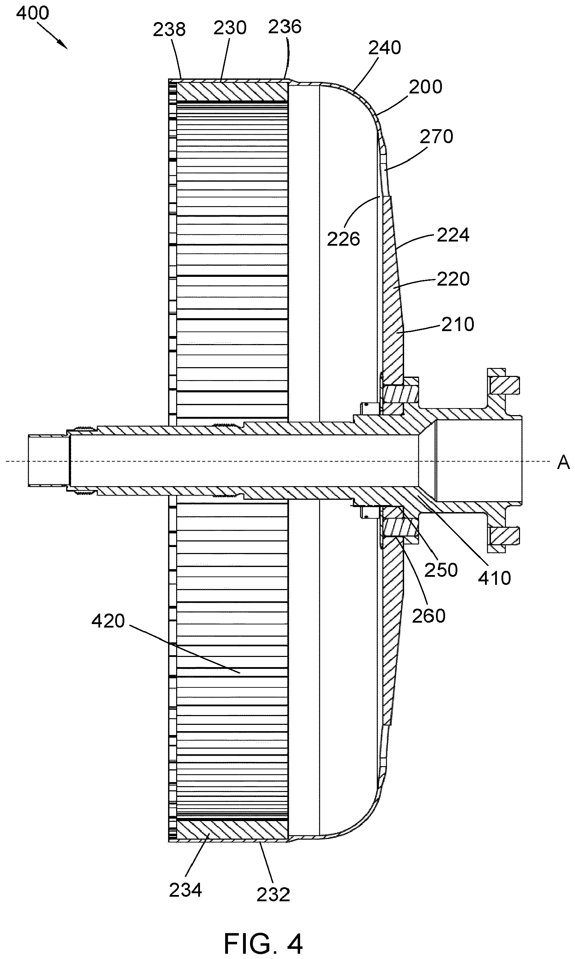

Figure 4 shows the magnet carrier 200 disposed in an outer rotor machine 400. A shaft 410 extends through the central hole 250 in the magnet carrier 200. Magnets 420 are disposed within seats provided in the radially inwardly facing surface 234 of the flange portion 230.

The tapered portion 220 tapers in thickness from the hub portion 210 towards the corner portion 240. Where the tapered portion 220 meets the hub portion 210, the thickness is of a first thickness (and is the same thickness as the hub portion 210), and where the tapered portion 220 meets the corner portion 240 the thickness is of a second thickness (and is the same as the thickness of the corner portion). The first thickness is greater than the second thickness. The first thickness is approximately three times that of the first thickness. Alternatively the first thickness may be twice that of the second thickness, or four times that of the second thickness, or the first thickness may be a factor of between 2 and 4 times that of the second thickness.

In one example, the first thickness is approximately 13 mm, the second thickness is approximately 4 mm and the thickness of the flange portion 230 is approximately 2.2 mm. The thickness of each region may be selected considering the necessary strength and stiffness for that region, as well as considering the control of the resonant frequency away from frequency of drive shaft of the outer rotor machine into which the magnet carrier is to be placed, so that in use, negative effects resulting from resonance between the magnet carrier and the outer rotor machine outer rotor machine are mitigated.

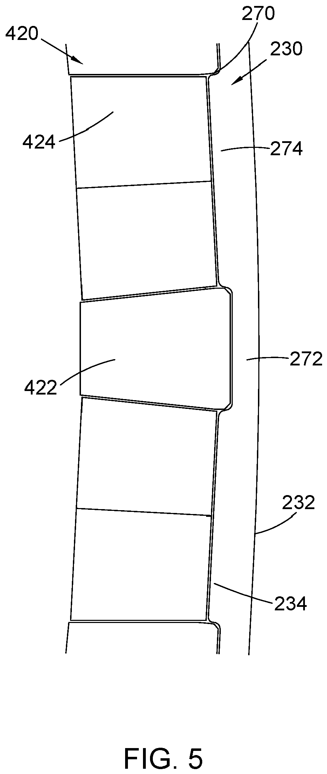

Figure 5 shows the radially inwardly facing surface 234 of the flange portion 230, and the radially outwardly facing surface 232 of the flange portion 230. The radially inwardly facing surface 234 comprises castellations 270. The castellations 270 form recesses 272 and protrusions 274 in the radially inwardly facing surface 234. Magnets 420 are secured to the radially inwardly facing surface 234 of the flange portion 230 so as to form an annulus of magnets within the magnet carrier 200. The magnets 420 form a Halbach array in which pole magnets 422 are disposed in the recesses 272, and transition magnets 424 are disposed on the protrusions 274. Each of the magnets 420 are shaped in a wedge shape so as to form the curved annulus and so that the magnets 420 are constrained in their positions through via the adjacent magnets 420. The magnets 420 are bonded to the radially inwardly facing surface of the flange portion 234 using an adhesive.

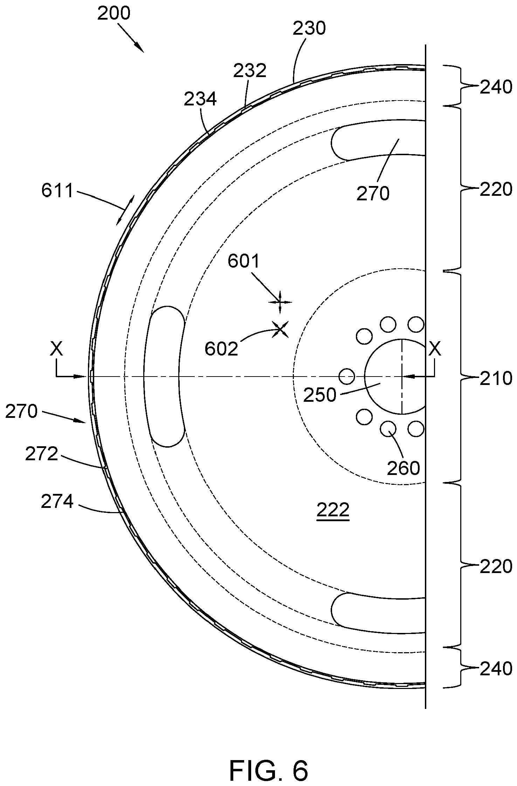

Figure 6 shows the magnet carrier 200. Castellations 270 are formed on the radially inwardly facing surface 234 of the flange portion 230.

The magnet carrier 200 is formed from stacked carbon fibre composite plies. In the hub portion 210 and tapered portion 220, the fibre orientation within the plies alternates between 0/90 degrees 601, and +/-45 degrees 602. The orientation of the carbon fibres in adjacent plies is offset by 45 degrees so that the high tensile strength and high modulus of the fibres is utilised to provide strength to the hub portion 210 and tapered portion 220 in all directions.

The stack of carbon fibre composite plies in the flange portion 230 include plies having unidirectional carbon fibres and arranged so that the orientation of the carbon fibres is aligned with the hoop direction 611 of the flange portion 230.

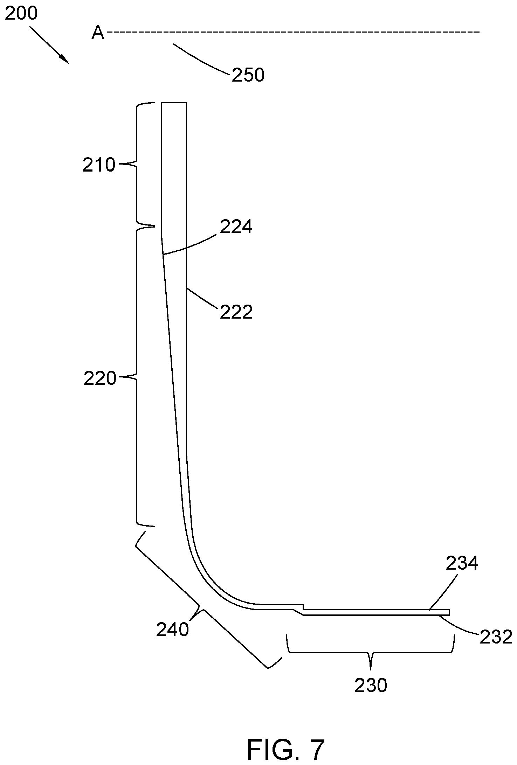

Figure 7 shows a cross section of the magnet carrier 200 taken along line X-X in Figure 6. The cross section shows the integral formation of the hub portion 210, the tapered portion 220, the corner portion 240 and the flange portion 230.

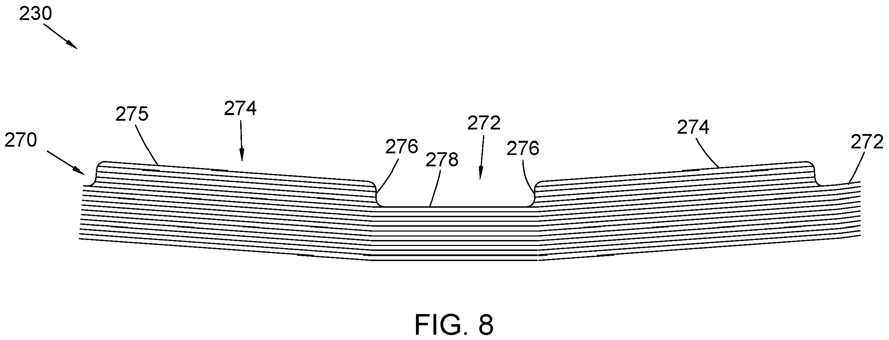

Figure 8 shows a fragmented view of an axial cross section of the flange portion 230 illustrating the castellations 270 of the flange portion 230. Figure 8 also schematically illustrates the stacked configuration of the carbon fibre composite plies which form the structure. Since this is illustrated schematically the number of plies used in the actual magnet carrier may differ from the number of shown in the figure.

The castellations 270 are provided along the radially inwardly facing surface 234 of the flange portion 230 such that the radial position of the inwardly facing surface 234 of the flange portion 230 alternates in a circumferential direction around the magnet carrier between a first radial position and a second radial position. The first radial position is closer to the radial centre of the magnet carrier than the second radial position. A series of recesses 272 and protrusions 274 are thus provided around the inner circumference of the flange portion 230.

The recesses 272 are bounded by a circumferentially and axially extending base surface 278 and two radially and axially extending wall surfaces 276. The base surface 278 is a portion of the radially inner surface 234 of the flange portion 230 disposed at the second radial position. The wall surfaces 276 connect the base surface 278 (the radially inner surface 234 of the flange portion 230 at the second radial position) to the protrusion surface 275. The protrusion surface 275 is a portion of the radially inner surface 234 of the flange portion 230 disposed at the first radial position.

Protrusions 274 are formed by additional layers of the carbon fibre composite plies. Recesses 272 are correspondingly formed in the flange portion 230 where the additional plies are not provided.

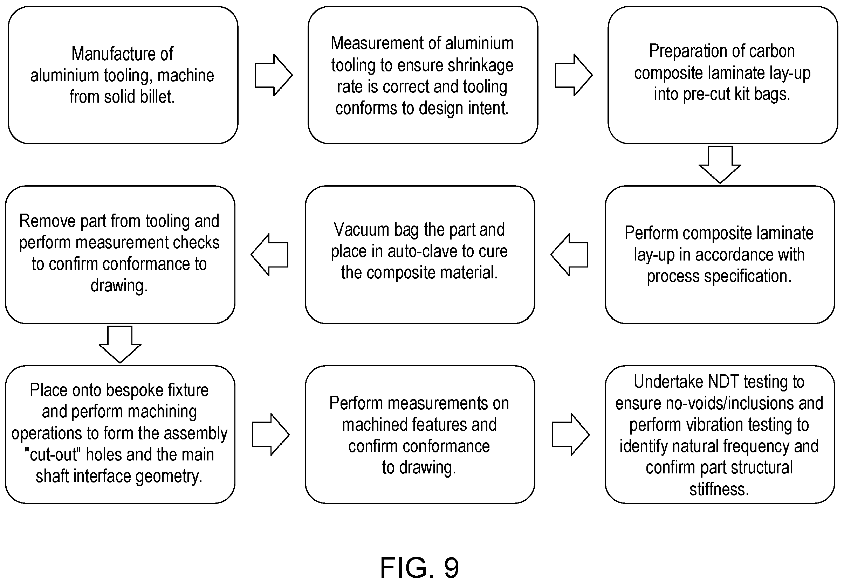

There is also provided a method of manufacturing a magnet carrier 200. A flow chart illustrating such a manufacturing method is shown in Figure 9. The method includes providing a tool on which to mould the magnet carrier 200 discussed above. The surface of the tool being shaped to the inverse of a surface of the magnet carrier. The tool can be manufactured by machining a solid aluminium billet into the desired shape. The dimensions of the tool are cut and measured to ensure the shrinkage rate of the tool is correct, such that the tooling conforms to the design intent of the magnet carrier 200 when the tool is at autoclaving conditions. The tool is therefore designed to be smaller than the design intent of the magnet carrier at room temperature so that when placed in an autoclave for curing the carbon fibre composites, the tool expands due to thermal expansion and sets the composite to design intent shape of the magnet carrier 200. On cooling, the tool shrinks to help release the magnet carrier 200 from the outer surface of the tool.

Carbon fibre composite plies are laid-up against the tool in accordance with the relevant process specifications. The configuration of the stack of carbon fibre composite plies, and hence the lay-up process to achieve it, is unique to a specific application. The specific lay-up design used will depend on the expected load and scenarios experienced in use by the final magnet carrier.

In one example, the laminate layup may begin with the 0°/90° and +/-45° twill weave sections forming the first few layers of hub portion 210 and the tapered portion 220. Then the corner portion 240 and the flange portion 230 are formed from layers of twill weave and uni-directional epoxy pre-preg composite. The flange portion comprises plies of uni-directional fibres aligned with the hoop direction of the flange portion, sandwiched between plies of twill weave fibres configured in 0°/90° and ±45° orientations to provide sufficient hoop and radial stiffness to the part. The lay-up process results in a carbon fibre composite body positioned on top of the tool.

The carbon fibre composite body and tool are vacuum bagged and placed in an autoclave to cure the carbon fibre composite body. This process of adding composite layers followed by vacuum bagging is repeated throughout the manufacturing build process to form the final part in accordance with the specified structural zones, i.e. the hub portion 210, tapered portion 220, corner portion 240 and flange portion 230. During the manufacturing build process a number of layers are interspersed across the entire structure in order to capture all of the structural zones (the hub portion 210, tapered portion 220, corner portion 240 and flange portion 230) to ensure structural integrity and continuous nature of the carbon fibre composite forming the final magnet carrier.

After autoclaving the cured part is removed from the tool and its dimensions checked for conformation with the design intent shape of the magnet carrier. Nondestructive-testing can be carried out after one or more autoclaving step, or after the final autoclaving step to ensure that no-voids or inclusions are present in the part or final magnet carrier. Vibration testing can be performed on the final magnet carrier to identify its natural frequency and confirm the structural stiffness of the magnet carrier.

## Claims

1. A magnet carrier for carrying magnets in an outer rotor machine, the magnet carrier comprising:
an axis of rotation;
a hub portion;
a tapered portion extending radially outwardly from the hub portion, the tapered portion having an inner side and an outer side, and a radially outer region spaced from the hub portion;
a flange portion extending circumferentially from, and away from, the inner side of the tapered portion, the flange portion having a radially outwardly facing surface and a radially inwardly facing surface, the radially inwardly facing surface for supporting the magnets, and the flange portion having a proximal region and a distal region that are proximal and distal to the tapered portion respectively; and
a curved corner portion connecting the radially outer region of the tapered portion to the proximal region of the flange portion,
wherein each of the hub portion, the tapered portion, the corner portion and the flange portion of the magnet carrier are made of a carbon fibre composite and each portion leads into the next portion so as to provide a continuous composite body from the hub portion to the distal region of the flange portion.

2. A magnet carrier as claimed in claim 1, wherein the magnet carrier has been formed from stacked carbon fibre composite plies.

3. A magnet carrier as claimed in claim 2, wherein the plies within the stack of plies forming the tapered portion are formed of twill weave carbon fibre composite plies and are stacked in order to alternate between a 0/90 configuration and a +/-45 configuration.

4. A magnet carrier as claimed in any of claims 2 or 3, wherein the stack of carbon fibre composite plies forming the flange portion comprises a first stack section of unidirectional plies in which the fibres of the unidirectional plies substantially align with the hoop direction of the flange portion.

5. A magnet carrier as claimed in claim 4, wherein the first stack section of the stack of carbon fibre composite plies forming the flange portion is disposed between a second stack section and a third stack section, each of the second and third stack sections comprise twill weave carbon fibre composite plies stacked in order to alternate between a 0/90 configuration and a +/-45 configuration.

6. A magnet carrier as claimed in any preceding claim, wherein:
the tapered portion tapers in thickness from the hub portion towards the corner portion from a first thickness at the hub portion to a second thickness at the corner portion, the first thickness being at least twice that of the second thickness, optionally wherein the first thickness is at least three times that of the second thickness.

7. A magnet carrier as claimed in any preceding claim, wherein the radially inwardly facing surface of the flange portion comprises castellations, and recesses formed by the castellations provide a plurality of seats for at least some of the magnets.

8. A magnet carrier as claimed in claim 7, wherein the recesses extend in an axial direction across the radially inwardly facing surface separated by protrusions of the castellations, and optionally wherein a ratio of a circumferential length of the recesses to a circumferential length of the protrusions is between 1:1.5 and 1:2.5.

9. An outer rotor machine, comprising the magnet carrier as claimed in any preceding claim and a plurality of magnets fitted to the radially inwardly facing surface of the flange portion of the magnet carrier, optionally wherein the magnets have been secured to the magnet carrier using an adhesive.

10. An outer rotor machine as claimed in claim 9, wherein the plurality of magnets form a Halbach arrary of magnets, and wherein the pole magnets of the Halbach array are positioned within the recesses of the castellations and the transition magnets of the Halbach array are positioned on protrusions of the castellations.

11. An outer rotor machine as claimed in claim 9 or 10, wherein the magnet carrier is disposed in the machine in a cantilevered configuration.

12. An outer rotor machine as claimed in any of claims 9 to 11, wherein the outer rotor motor is for an aircraft propulsion engine, optionally an aircraft propeller.

13. A method of manufacturing a magnet carrier, the method comprising:
providing a tool on which to mould the magnet carrier of any of claims 1 to 8, the surface of the tool being shaped to the inverse of a surface of the magnet carrier;
laying up a carbon fibre composite body on top of the tool to form a magnet carrier pre-cursor; and
curing the carbon fibre composite body to form the magnet carrier.

14. The method as claimed in claim 13, wherein curing the carbon fibre composite body comprises vacuum bagging and autoclaving the magnet carrier pre-cursor to form the magnet carrier.

15. The method as claimed in claim 14, wherein the tool is made from aluminium and is shaped and dimensioned to be at design intent shape during autoclaving of the rotor precursor.
